# EUROPÄISCHE PATENTSCHRIFT

(11) **EP 2 107 297 B1**
(45) Veröffentlichungstag und Bekanntmachung des Hinweises auf die Patenterteilung: **04.01.2017**
(21) Anmeldenummer: 09004870.3
(22) Anmeldetag: 02.04.2009
(51) Int. Cl.: F21V 5/00, F21Y 101/00, F21Y 105/00, F21V 5/04, G02B 3/00, F21Y 115/10

(54) **Leuchte, insbesondere Raumleuchte**
Lamp, in particular room lamp
Eclairage, en particulier éclairage d'intérieur

(30) Priorität: 04.04.2008 DE 102008018448
(43) Veröffentlichungstag der Anmeldung: 07.10.2009
(73) Patentinhaber: Nimbus Group GmbH, 70469 Stuttgart (DE)
(72) Erfinder: Uxa, Dieter M., 71726 Benningen (DE); Wolfram, Stefan, Dipl.-Des., 81479 München (DE); Brennenstuhl, Dietrich, 70193 Stuttgart (DE)
(74) Vertreter: Witte, Weller & Partner Patentanwälte mbB

(56) Entgegenhaltungen:
- EP-A2- 1 843 081
- WO-A1-00/36336
- WO-A1-01/09859
- WO-A1-2004/102064
- US-A- 4 767 172
- US-A1- 2008 025 028

## Beschreibung

Die Erfindung betrifft eine Raumleuchte mit einer Mehrzahl von Beleuchtungsquellen, die von LEDs gebildet sind, und mit einem auf der Abstrahlseite der Beleuchtungsquellen vorgesehenen im Wesentlichen lichtdurchlässigen oder diffus lichtstreuenden plattenförmigen Körper, wobei der plattenförmige Körper entsprechend der Anordnung der Beleuchtungsquellen eine Mehrzahl von in Richtung der Abstrahlung der Beleuchtungsquellen oberflächenoffenen Öffnungen aufweist, durch welche die jeweilige Beleuchtungsquelle Licht abstrahlt und wobei der plattenförmige Körper von einer Richtung betrachtet sämtliche Komponenten der Raumleuchte überfängt und bis auf ein etwaiges rahmenbildendes Element die gesamte Sichtseite der Raumleuchte bildet, wobei die Öffnungen, die von der Sichtseite des plattenförmigen Körpers ausgehen, sich in Richtung der Abstrahlung der Beleuchtungsquellen erweiternd, insbesondere kontinuierlich erweiternd ausgebildet sind.

Eine derartige Leuchte ist bekannt aus EP 1 843 081 A2. Bei dieser Leuchte sind die Beleuchtungsquellen, d.h. die LEDs, im Bereich des Endes einer durch den plattenförmigen Körper hindurchgehenden Öffnung vorgesehen.

Das Dokument US 2008/0025028 A1 offenbart eine zylindrische Leuchte, innerhalb der eine erste Leiterplatte mit LEDs und eine zweite Leiterplatte angeordnet sind. Die zwei Leiterplatten sind im Wesentlichen senkrecht zueinander in dem Leuchtenkörper montiert. Vor der LED-Leiterplatte ist ein einstückiger Linsen-Array angeordnet, wobei vor diesem noch eine äußere Linse und ggf. weitere Bauteile angeordnet sind.

Aus dem Dokument WO 01/09859 A1 ist eine LED-Leuchte für das Verkehrswesen gezeigt, wobei einzelne LEDs in kegel-förmigen Vertiefungen einer verspiegelten Reflektoranordnung aufgenommen sind.

Schließlich offenbart das Dokument US 4,767,172 A einen Lichtkollektor für einen LED-Array. Vor eine Leiterplatte mit mehreren in einer Reihe angeordneten LEDs wird ein Kollektor angeordnet, der aus einem durchsichtigen Material hergestellt ist und eine Lufttasche für jede LED aufweist, sowie einen sich in axialer Richtung hiervon erstreckenden konvexen mittleren Linsenabschnitt. Um den Linsenabschnitt herum ist ein Ringabschnitt ausgebildet. Lichtstrahlen von dem LED werden in den Ringabschnitt eingeleitet und durch eine geeignete gekrümmte Außenfläche so reflektiert, dass sie in einer Richtung parallel zueinander und senkrecht gegenüber einer Substratfläche der LEDs abgestrahlt werden. Auch die Form der Mittellinse ist so gewählt, dass die Strahlen aus dieser parallel austreten, um auf diese Weise kollimierte Lichtstrahlen zu erhalten, die in einen optischen Wellenleiter einprojiziert werden können. Die Anordnung eignet sich insbesondere, um ausgewählte Abschnitte einer fotoleitenden Oberfläche durch kollimiertes Licht zu entladen, also beispielsweise für eine elektrofotografische Maschine.

Hiervon ausgehend liegt der vorliegenden Erfindung die Aufgabe zugrunde, den Anwendungsbereich der Raumleuchte zu erweitern und auf wirtschaftliche Weise eine noch bessere Lichtsteuerung bei der Raumleuchte vorzusehen.

Diese Aufgabe wird durch eine Raumleuchte gemäß Anspruch 1 gelöst, wobei die Öffnungen als Sacklochöffnungen in dem plattenförmigen Körper ausgebildet und von einem Boden begrenzt sind und dass der jeweilige Boden ein optisch wirksames Linsenmittel bildet, welches jeweils einstückig mit dem plattenförmigen Körper ausgebildet ist, und dass zwischen einer lichtaussendenden Fläche einer jeweiligen LED und dem plattenförmigen Körper oder dem Linsenmittel ein Abstand ausgebildet ist.

Dadurch, dass in dem plattenförmigen Körper bzw. in den Öffnungen des plattenförmigen Körpers ein optisch wirksames, Linsenmittel im weitesten Sinne mit gekrümmten Oberflächen vorgesehen sind, welches vorzugsweise lichtbündelnd wirkt, zumindest grundsätzlich aber auch lichtaufweitend sein kann, lässt sich dementsprechend eine Lichtleitung des von den LEDs ausgesandten Lichts erreichen. Die Öffnungen sind erfindungsgemäß nicht als Durchgangsöffnungen, sondern als Sacklochöffnungen oder Vertiefungen in dem plattenförmigen Körper ausgebildet, und somit kann erfindungsgemäß ein jeweiliger Boden dieser Öffnungen ein optisch wirksames Linsenmittel bilden. Das Linsenmittel ist also erfindungsgemäß einstückig mit dem plattenförmigen Körper selbst ausgebildet bzw. von diesem durch entsprechende Formgebung gebildet. Somit werden erfindungsgemäß Dichtungsprobleme und schwer beherrschbare Grenzflächeneffekte, welche die Steuerung der Lichtleitung problematisch gestalten und nur schwer beherrschbar sind, ausgeschaltet. Vorzugsweise wird das optisch wirksame Linsenmittel allein durch die Formgebung der gekrümmten Oberfläche ausgebildet. Dies kann durch eine materialabtragende Bearbeitung des plattenförmigen Körpers selbst geschehen. Die Öffnungen und damit das jeweilige optisch wirksame Linsenmittel können aber auch im Zuge der Herstellung des plattenförmigen Körpers in einem Spritzgießvorgang gebildet oder zumindest vorgeformt werden.

Es erweist sich weiter als vorteilhaft, wenn der flächenhaft erstreckte plattenförmige Körper eine Abmessung seiner Sichtseite von wenigstens 10 cm * 10 cm bis hin zu insbesondere höchstens 120 cm * 120 cm bei großen Raumleuchten aufweist. Die Geometrie muss aber nicht quadratisch sein. Die Raumleuchte wird also durch den nur einige mm bis etwa 20 mm, insbesondere bis 10 mm dicken und wie vorstehend ausgeführt flächenhaft erstreckten plattenförmigen Körper in ihrer räumlichen Ausdehnung sowie optisch dominiert.

Erfindungsgemäß erweist es sich weiterhin als vorteilhaft, dass zwischen einer jeweiligen lichtaussendenden Fläche einer jeweiligen LED und dem plattenförmigen Körper oder dem einstückig mit dem plattenförmigen Körper ausgebildeten Linsenmittel ein Abstand ausgebildet ist. Dieser Abstand kann vorteilhafterweise gasbefüllt, insbesondere luftbefüllt sein, so dass zwischen der lichtaussendenden Fläche und dem plattenförmigen Körper oder Linsenmittel ein Medium mit einem gegenüber dem Linsenmittel geringeren Brechungsindex vorgesehen ist. Auf diese Weise kann eine bessere Lichtleitung bzw. vorzugsweise Lichtbündelung durch das Linsenmittel in der gewünschten Weise erreicht werden.

Die Öffnungen können dabei in vorteilhafter Weise im Querschnitt in der Ebene des plattenförmigen Körpers verrundet, insbesondere kreisrund oder oval ausgebildet sein. Nach einer weiteren vorteilhaften Ausführungsform sind die Öffnungen konisch ausgebildet.

Es erweist sich weiter als vorteilhaft, Beleuchtungsquellen in Form von LEDs einzusetzen, die mit einem Abstrahlwinkel von 100 bis 130°, insbesondere 110 bis 125° und weiter insbesondere 115 bis 122° abstrahlen. Dieser Abstrahlwinkel wird in einer Ebene senkrecht zur lichtaussendenden Fläche der jeweiligen LED bestimmt; er gibt gewissermaßen dasjenige Raumwinkelsegment vor, innerhalb dessen der plattenförmige Körper von einer jeweiligen LED mit Licht beaufschlagt wird.

Nach einer weiteren Ausführungsform der Erfindung erweist es sich als vorteilhaft, dass der plattenförmige Körper auf seiner den Beleuchtungsquellen zugewandten Seite Vertiefungen aufweist, in welche die LEDs Licht in Richtung auf den plattenförmigen Körper und das Linsenmittel einstrahlen. Diese den Beleuchtungsquellen zugewandten Vertiefungen in dem plattenförmigen Körper können eine im Wesentlichen zylindrische, quaderförmige oder leicht prismatische Gestalt mit geneigten Flanken haben.

Nach einer weiteren Ausführungsform werden diese den Beleuchtungsquellen zugewandten Vertiefungen in dem plattenförmigen Körper von dem optisch wirksamen Linsenmittel des plattenförmigen Körpers unmittelbar begrenzt. Des Weiteren erweist es sich als besonders vorteilhaft, wenn die LEDs zumindest mit ihren lichtaussendenden Flächen in diese Vertiefungen einragen oder eintauchen. Ein Träger für die Beleuchtungsquellen, d.h. für die LEDs, kann dann ohne weiteres gegen die Rückseite des plattenförmigen Körpers anliegen bzw. gegen diese Rückseite abgestützt sein kann und dennoch die LEDs in einem Abstand zu dem plattenförmigen Körper halten.

Erfindungsgemäß ist die Anordnung und Ausbildung der Beleuchtungsquellen und des plattenförmigen Körpers derart, dass Licht, welches von den Beleuchtungsquellen nicht durch die sich insbesondere kontinuierlich erweiternden Öffnungen als Primärstrahlung abgestrahlt wird, in den insbesondere diffus lichtstreuenden plattenförmigen Körper eingeleitet wird und durch diesen als gestreute Sekundärstrahlung abgestrahlt wird. Dies erweist sich aus designtechnischen Gesichtspunkten als vorteilhaft, da der plattenförmige Körper so selbst erleuchtet erscheint.

Nach einem weiteren Erfindungsgedanken sind die Öffnungen und die ihnen zugeordneten Linsenmittel zur Ebene des plattenförmigen Körpers geneigt; dabei können die geometrischen Hauptachsen der Öffnungen und der Linsenmittel übereinstimmen. Es lässt sich auf diese Weise eine Lichtleitung realisieren, bei der eine Hauptabstrahlrichtung von der Flächennormalen bezüglich der Ebene des plattenförmigen Körpers abweicht, also zu dieser geneigt ist. Auf diese Weise können bestimmte Bereiche eines Raums beispielsweise seitlich unterhalb einer

Deckenleuchte erleuchtet werden. Es lassen sich selbstverständlich auch geneigte Öffnungen und Öffnungen, deren Hauptachse parallel zur Flächennormalen des plattenförmigen Körpers verläuft, miteinander kombinieren.

Im Hinblick auf eine maximale Gestaltungsfreiheit bei der Ausbildung des plattenförmigen Körpers und dessen Öffnungen und Linsenmittel erweist es sich als besonders vorteilhaft, wenn die LEDs und deren lichtaussendende Flächen unabhängig von einer etwaigen Neigung der Öffnungen parallel zur Ebene des plattenförmigen Körpers oder zumindest alle in zueinander parallelen Ebenen angeordnet sind. Auf diese Weise ist die Anordnung der LEDs unabhängig von der Anordnung, d. h. Neigung der Öffnungen und der Linsenmittel in dem plattenförmigen Körper.

Die Öffnungen in dem plattenförmigen Körper können zweckmäßigerweise einen Öffnungswinkel von 30 bis 130°, insbesondere von 30 bis 110°, insbesondere von 30 bis 100° und weiter insbesondere von 30 bis 90° aufweisen.

Weiter erweist es sich als vorteilhaft, dass die LEDs auf einem die elektrischen Komponenten der Raumleuchte umfassenden Träger angeordnet sind und dieser Träger zusammen mit den LEDs gegen den plattenförmigen Körper montierbar ist und zusammen mit den LEDs von dem plattenförmigen Körper demontierbar, also lösbar ist. Diese Ausführungsform ist zum einen auf wirtschaftliche Weise herstellbar, zum anderen eröffnet sie die Möglichkeit, auf wirtschaftliche Weise eine Wartung oder Reparatur der Raumleuchte vorzunehmen, im einfachsten Fall dadurch, dass ein beschädigter plattenförmigen Körper oder eine defekte Beleuchtungseinrichtung einfach durch Austausch des Körpers bzw. des die LEDs umfassenden Trägers behoben wird. Derartiges wäre bei in die Öffnungen eingeklebten LEDs nicht möglich. Auch in Fällen, in denen die LEDs, deren Träger und die elektrischen Komponenten der Raumleuchte an verschiedenen handhabbaren Teilen befestigt sind, gestaltet sich eine Reparatur oder ein Austausch als schwer möglich.

Die Mehrzahl von Beleuchtungsquellen kann beispielsweise arrayförmig, also matrix- oder gitterbildend, angeordnet sein, oder die Beleuchtungsquellen können in einer linienförmigen, insbesondere linearen Anordnung vorgesehen sein.

Für die Anzahl der Beleuchtungsquellen bzw. LEDs besteht ebenfalls keine Einschränkung. Zweckmäßigerweise kann die Raumleuchte 9 bis 400, insbesondere 9 bis 150, insbesondere 9 bis 100, insbesondere 9 bis 70 Beleuchtungsquellen umfassen.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der erfindungsgemäßen Raumleuchte. In der Zeichnung zeigt:
Figur 1 eine perspektivische Ansicht einer Raumleuchte mit Blick auf die Sichtseite der Raumleuchte;
Figur 2 eine Schnittansicht mit Schnittebene A-A in Figur 1;
Figur 3 eine Schnittansicht durch einen lichtdurchlässigen plattenförmigen Körper einer weiteren Ausführungsform der Raumleuchte mit geneigten Öffnungen in dem plattenförmigen Körper;
Figur 4 eine teilweise perspektivische Ansicht einer Raumleuchte mit linear angeordneten Beleuchtungsquellen; und
Figur 5 eine Schnittansicht der Raumleuchte nach Figur 4 mit Schnittebene B-B.

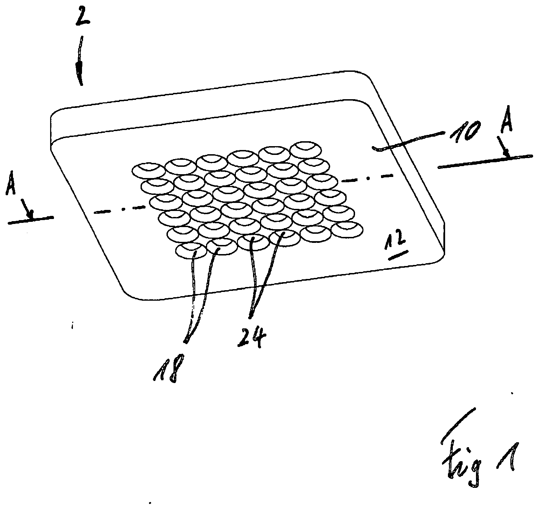

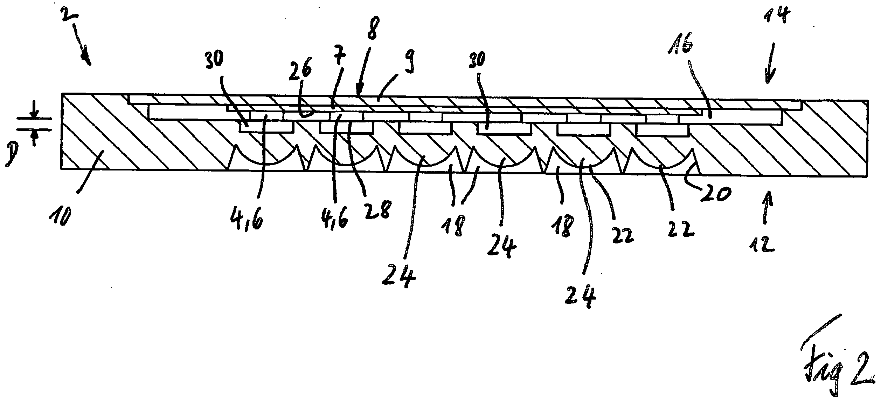

Die Figuren 1 und 2 zeigen eine erste Ausführungsform einer insgesamt mit dem Bezugszeichen 2 bezeichneten Raumleuchte, die insbesondere als Aufbauleuchte an eine Decke oder eine Wand auf nicht dargestellte Weise montierbar ist. Die Raumleuchte 2 umfasst eine Mehrzahl von Beleuchtungsquellen 4 in Form von LEDs 6. Die Beleuchtungsquellen 4 bzw. LEDs 6 sind im beispielhaft dargestellten Fall array- oder matrixförmig regelmäßig in einer Ebene angeordnet. Die LEDs und vorzugsweise die gesamten elektrischen Komponenten der Raumleuchte sind auf einem plattenförmigen Träger 8 angeordnet und bilden mit diesem eine vormontierbare elektrische Einheit der Raumleuchte. Der Träger umfasst im dargestellten Fall eine Leiterplatte 7, auf der die LED's angeordnet sind, und eine die Rückseite der Raumleuchte bildende Halteplatte 9, vorzugsweise aus Metall. Die Raumleuchte 2 umfasst weiter einen im Wesentlichen lichtdurchlässigen oder diffus lichtstreuenden plattenförmigen Körper 10, der die gesamte Sichtseite der Raumleuchte 2 bildet. Auf seiner von der Sichtseite 12 abgewandten Montageseite 14 ist der plattenförmigen Körper 10 mit einer flächenhaften nur wenige Millimeter tiefen Ausnehmung 16 ausgebildet, in der der Träger 8 mit den LEDs und den elektrischen Komponenten der Raumleuchte aufgenommen ist. Die Halteplatte 9 des Trägers 8 liegt auf dieser Montageseite 14 des plattenförmigen Körpers 10 gegen den plattenförmigen Körper 10 an und ist mit diesem vorzugsweise lösbar montageverbunden.

Der plattenförmige Körper 10 umfasst des Weiteren entsprechend der Anordnung der Beleuchtungsquellen 4 eine Mehrzahl von ebenfalls arrayförmig angeordneten und in Richtung der Abstrahlung der Beleuchtungsquellen 4, also zur Sichtseite 12, oberflächenoffenen Öffnungen 18. Die Öffnungen 18 sind im beispielhaft dargestellten und bevorzugten Fall in Richtung der Abstrahlung der Beleuchtungsquellen 4 sich kontinuierlich erweiternd und konisch ausgebildet, d.h. sie haben eine runde konische Flanke 20. Die Öffnungen 18 sind aber nicht als Durchgangsöffnungen in dem plattenförmigen Körper 10 ausgebildet, sondern als Sacklochöffnungen mit einem Boden 22 der Öffnung. Dieser Boden bildet ein optisch wirksames, vorzugsweise lichtbündelndes Linsenmittel 24. Dieses Linsenmittel 24 ist dabei einstückig und somit materialidentisch mit dem plattenförmigen Körper 10 ausgebildet. Es wird also von dem Material des plattenförmigen Körpers 10 selbst gebildet. Beispielsweise können die Öffnungen durch materialabhebende Bearbeitung, beispielsweise durch einen Fräsvorgang bei dem plattenförmigen Körper 10 gebildet werden. Es wäre aber auch denkbar und für viele Anwendungen vorteilhaft, wenn die Öffnungen 18 und die Linsenmittel 24 durch einen Spritzgießvorgang bei der Herstellung des plattenförmigen Körpers 10 gebildet werden.

Der Öffnungswinkel der jeweiligen Öffnungen 18 beträgt im beispielhaft dargestellten Fall 38°. Durch das Linsenmittel 24 lässt sich Licht, welches von den LEDs 6 ausgesandt wird, sehr weitgehend in den von dem Öffnungswinkel der Öffnungen 18 definierten Raumwinkelbereich fokussieren. Es kann eine sehr starke gerichtete Leuchtleistung in den Raum abgegeben werden. Somit kann auf aufwendige Verspiegelungsmaßnahmen bei den Flanken 20 der Öffnungen 18 verzichtet werden.

Wie bereits erwähnt, entspricht die Anordnung der Öffnungen 18 und der Linsenmittel 24 der Anordnung der Beleuchtungsquellen 24 in Form der LEDs 6. Die LEDs 6 sind, wie erwähnt, auf der Leiterplatte 7 des plattenförmigen Trägers 8 vormontiert angeordnet. Der Träger 8 ist von der Montageseite 14 her in der rückwärtigen Ausnehmung 16 des plattenförmigen Körpers 10 aufgenommen. Er liegt im bevorzugten Fall flächenhaft stabilisiert gegen die Rückseite des plattenförmigen Körpers 10 an. Die LEDs 6 stehen im beispielhaft dargestellten Fall von einer Oberfläche 26 des Trägers 8 bzw. von der Leiterplatte 7 etwas vor. Dennoch haben sie einen Abstand D zwischen ihrer lichtaussendenden Fläche 28 und dem plattenförmigen Körper 10 bzw. dem Linsenmittel 24. Dieser Abstand D ist mit Luft gefüllt und von einer jeweiligen Vertiefung 30 in dem plattenförmigen Körper 10 gebildet. Auf diese Weise kann der Träger 8 für die LEDs stabil und definiert gegen den plattenförmigen Körper 10 anliegen, wobei dennoch ein Abstand D zwischen einer jeweiligen LED 6 und dem plattenförmigen Körper 10 realisiert werden kann.

Der gesamte Bereich des plattenförmigen Körpers 10 zwischen der jeweiligen Vertiefung 30 und dem Boden 22 der jeweiligen Öffnung 18 bildet das optisch wirksame Linsenmittel 24, welches Licht beim Eintritt bzw. Austritt in das Material des plattenförmigen Körpers durch Brechung in an sich bekannter und daher nicht zu beschreibender Weise ablenkt. Hierdurch kann durch geeignete Formgebung eine Fokussierung oder Aufweitung entsprechend den Konfigurationsanforderungen an die Raumleuchte realisiert werden.

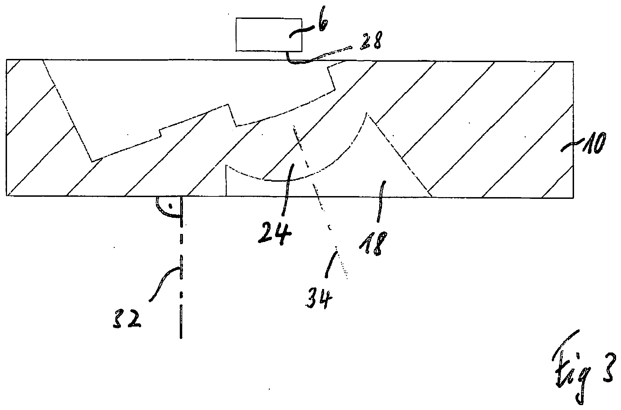

Figur 3 verdeutlicht anhand eines Schnitts durch eine weitere Ausführungsform einer Raumleuchte bzw. eines plattenförmigen Körpers 10 einer Raumleuchte mit schematisch angedeuteter LED 6, dass die Öffnungen 18 bezüglich einer Normalen 32 zur Ebene des plattenförmigen Körpers 10 auch geneigt ausgebildet sein können. Zweckmäßige Neigungswinkel sind 10 - 30°, insbesondere 10 - 25°. Auch das Linsenmittel 24 ist in entsprechender Weise wie die Öffnungen 18 geneigt angeordnet, wobei die beiden geometrischen Hauptachsen 34 einer jeweiligen Öffnung 18 und eines jeweiligen Linsenmittels 24 übereinstimmen. Als besonders vorteilhaft erweist es sich, dass die jeweiligen LEDs 6 nicht ebenfalls der geneigten Anordnung bedürfen. Sie können vielmehr im Wesentlichen so wie in Verbindung mit Figur 2 beschrieben angeordnet werden, d. h. ihre jeweilige lichtaussendende Fläche 28 kann auch bei dieser geneigten Anordnung der Öffnungen 18 und des Linsenmittels 24 parallel zur Ebene des plattenförmigen Körpers 10 verlaufen. Figur 3 stellt lediglich einen Ausschnitt im Bereich einer Öffnung 18 dar und ist entsprechend auf eine lineare oder arrayförmige Anordnung erweitert zu verstehen. Es sei in diesem Zusammenhang auch erwähnt, dass bei einer Raumleuchte geneigte und nicht geneigte Öffnungen 18 und Linsenmittel 24 vorgesehen werden können, ohne dass dies einer Anpassung der Ausbildung des Trägers 8 mit den LEDs 6 bedarf.

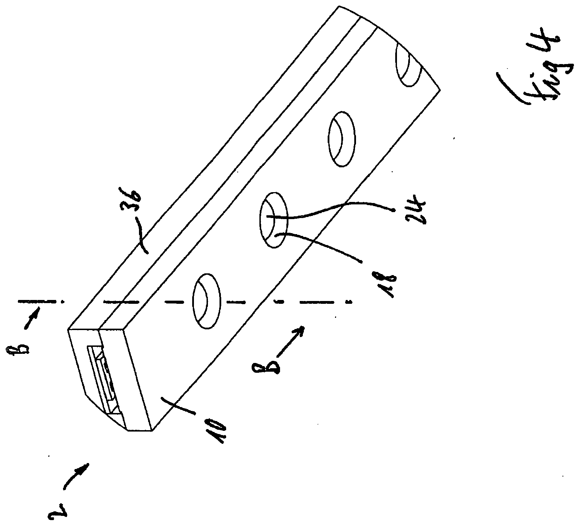

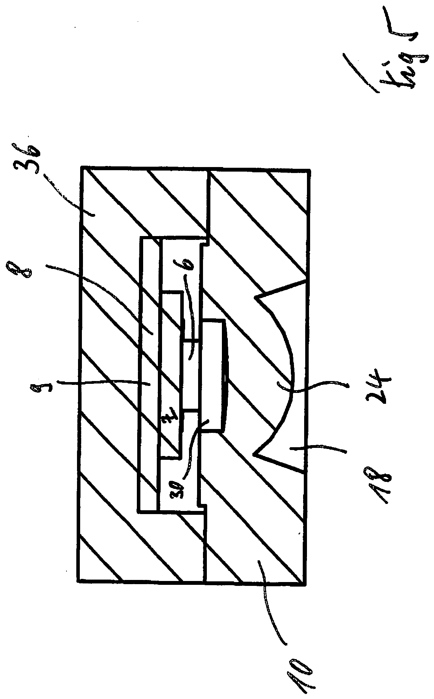

Figuren 4 und 5 zeigen eine Ausführungsform einer erfindungsgemäßen Raumleuchte 2, bei der die Beleuchtungsquellen 4 wiederum in Form von LEDs 6 nicht arrayförmig, sondern linear angeordnet sind. Der plattenförmige Körper 10 ist in diesem Fall langgestreckt ausgebildet. Er umfasst entsprechend ausgebildete Öffnungen 18 und Linsenmittel 24. Im beispielhaft dargestellten Fall sind die Öffnungen 18 und somit auch die LEDs 6 jedoch in einem größeren Abstand voneinander angeordnet als bei der Ausführungsform nach Figur 1. Man erkennt aus der Schnittdarstellung der Figur 5, dass auf der den Beleuchtungsquellen zugewandten Seite des plattenförmigen Körpers wiederum Vertiefungen 30 ausgebildet sind, in welche die LEDs 6 einstrahlen können. Die LEDs 6 sind wiederum an einem Träger 8 gehalten, der sowohl eine Leiterplatte 7 für die LEDs sowie einen vorzugsweise metallischen Trägerstreifen 9 umfasst. Zusätzlich ist ein langgestrecktes Kunststoffprofil 36, insbesondere aus Acrylglas, vorgesehen, welches im Querschnitt U-förmig ausgebildet ist und somit einen langgestreckten Aufnahmeraum für den Träger 8 mit den elektrischen Komponenten und den LEDs 6 aufweist. Die Funktionsweise der Lichtabstrahlung bzw. der durch die Gestalt der optisch wirksamen Linsenmittel 24 herbeigeführten Lichtleitung ist wie bei der Ausführungsform nach Figuren 1 bis 3. Auch hier können gewünschtenfalls geneigte Öffnungen und/oder geneigte optisch wirksame Linsenmittel vorgesehen werden.

## Patentansprüche

1. Raumleuchte (2), mit einer Mehrzahl von Beleuchtungsquellen (4), die von LEDs (6) gebildet sind, und mit einem auf der Abstrahlseite der Beleuchtungsquellen (4) vorgesehenen im wesentlichen lichtdurchlässigen oder diffus lichtstreuenden plattenförmigen Körper (10), wobei der plattenförmige Körper (10) entsprechend der Anordnung der Beleuchtungsquellen (4) eine Mehrzahl von in Richtung der Abstrahlung der Beleuchtungsquellen (4) oberflächenoffenen Öffnungen (18) aufweist, durch welche die jeweilige Beleuchtungsquelle (4) Licht abstrahlt und wobei der plattenförmige Körper (10) von einer Richtung betrachtet sämtliche Komponenten der Raumleuchte überfängt und bis auf ein etwaiges rahmenbildendes Element die gesamte Sichtseite (12) der Raumleuchte bildet, wobei die Öffnungen (18) sich in Richtung der Abstrahlung der Beleuchtungsquellen (4) erweiternd, insbesondere kontinuierlich erweiternd ausgebildet sind, und wobei Licht, welches von den Beleuchtungsquellen (4) nicht durch die sich erweiternden Öffnungen (18) als Primärstrahlung abgestrahlt wird, in den plattenförmigen Körper (10) eingeleitet wird und durch diesen als gestreute Sekundärstrahlung abgestrahlt wird, **dadurch gekennzeichnet, dass** die Öffnungen (18) als Sacklochöffnungen in dem plattenförmigen Körper (10) ausgebildet und von einem Boden (22) begrenzt sind und dass der jeweilige Boden (22) ein optisch wirksames Linsenmittel (24) bildet, welches jeweils einstückig mit dem plattenförmigen Körper (10) ausgebildet ist, und dass zwischen einer lichtaussendenden Fläche (28) einer jeweiligen LED (6) und dem plattenförmigen Körper (10) oder dem Linsenmittel (24) ein Abstand (D) ausgebildet ist.

2. Raumleuchte nach Anspruch 1, **dadurch gekennzeichnet, dass** die Öffnungen (18) im Querschnitt in der Ebene des plattenförmigen Körpers (10) verrundet, insbesondere kreisrund oder oval ausgebildet sind.

3. Raumleuchte nach Anspruch 1 oder 2, **dadurch gekennzeichnet, dass** die Öffnungen (18) konisch ausgebildet sind.

4. Raumleuchte nach einem oder mehreren der vorstehenden Ansprüche, **dadurch gekennzeichnet, dass** der Abstand (D) zwischen der lichtaussendenden Fläche (28) einer jeweiligen LED (6) und dem plattenförmigen Körper (10) oder dem Linsenmittel (24) gasbefüllt, insbesondere luftbefüllt ist.

5. Raumleuchte nach einem oder mehreren der vorstehenden Ansprüche, **dadurch gekennzeichnet, dass** eine jeweilige LED (6) mit einem Abstrahlwinkel von 100 - 130°, insbesondere 110 - 125°, insbesondere 115 - 122° abstrahlt.

6. Raumleuchte nach einem oder mehreren der vorstehenden Ansprüche, **dadurch gekennzeichnet, dass** der plattenförmige Körper (10) auf seiner den Beleuchtungsquellen (4) zugewandten Seite Vertiefungen (30) aufweist, in welche die LEDs (6) Licht in Richtung auf den plattenförmigen Körper (10) und das Linsenmittel (24) einstrahlen.

7. Raumleuchte nach Anspruch 6, **dadurch gekennzeichnet, dass** die Vertiefungen (30) eine im wesentlichen zylindrische, quaderförmige oder prismatische Gestalt haben.

8. Raumleuchte nach Anspruch 6 oder 7, **dadurch gekennzeichnet, dass** die Vertiefungen (30) von dem optisch wirksamen Linsenmittel (24) unmittelbar begrenzt werden.

9. Raumleuchte nach Anspruch 6, 7 oder 8, **dadurch gekennzeichnet, dass** die LEDs (6) zumindest mit ihren lichtaussendenden Flächen (28) in diese Vertiefungen (30) einragen oder eintauchen.

10. Raumleuchte nach einem oder mehreren der vorstehenden Ansprüche, **dadurch gekennzeichnet, dass** die Öffnungen (18) und die ihnen zugeordneten optisch wirksamen Linsenmittel (24) zur Ebene des plattenförmigen Körpers (10), insbesondere 10 - 30°geneigt sind.

11. Raumleuchte nach Anspruch 10, **dadurch gekennzeichnet, dass** die LEDs (6) und deren lichtaussendende Flächen (28) parallel zur Ebene des plattenförmigen Körpers (10) angeordnet sind oder zumindest alle in zueinander parallelen Ebenen angeordnet sind.

12. Raumleuchte nach einem oder mehreren der vorstehenden Ansprüche, **dadurch gekennzeichnet, dass** die Öffnungen (18) einen Öffnungswinkel von 30 - 130°, insbesondere von 30 - 110°, insbesondere von 30 - 100° und weiter insbesondere von 30 - 90° aufweisen.

13. Raumleuchte nach einem oder mehreren der vorstehenden Ansprüche, **dadurch gekennzeichnet, dass** die LEDs (6) auf einem die elektrischen Komponenten der Raumleuchte umfassenden Träger (8) angeordnet sind und dieser Träger (8) zusammen mit den LEDs (6) gegen den plattenförmigen Körper (10) montierbar ist und zusammen mit den LEDs (6) von dem plattenförmigen Körper (10) demontierbar also lösbar ist.

## Claims

1. A room-illuminating device (2), having a plurality of light sources (4) formed by LEDs (6), and having an essentially translucent or diffusely light-scattering plate-shaped body (10) provided on the radiating side of the light sources (4), wherein, in accordance with the arrangement of the light sources (4), the plate-shaped body (10) has a plurality of openings (18), which are open against the surface in the direction of radiation of the light sources (4), wherein the respective light source (4), radiates light through the opening, and wherein the plate-shaped body (10), when viewed from a direction, covers any components of the room-illuminating device and forms the entire visible side (12) of the room-illuminating device, except for an optional frame-forming element, wherein the openings (18) widen, particularly widen continuously, toward the direction of radiation of the light sources (4), and wherein light which is not radiated as primary radiation from the light sources (4) through the widening openings (18), is introduced into the plate-shaped body (10) and is radiated by the latter as diffusely scattered secondary radiation, **characterized in that** the openings (18) are formed as blind hole openings in the plate-shaped body (10) and are in each case limited by a base (22), wherein the respective base (22) forms an optically effective lens device (24) which is in each case formed integrally with the plate-shaped body (10), and wherein a distance (D) is established between a light-radiating surface (28) of a respective LED (6) and the plate-shaped body (10) or the lens device (24).

2. Room-illuminating device according to claim 1, **characterized in that** the openings (18), in a cross section in the plane of the plate-shaped body (10), are rounded, particularly are formed as a circle or are formed as an oval.

3. Room-illuminating device according to claim 1 or 2, **characterized in that** the openings (18) are formed as a conus.

4. Room-illuminating device according to one or several of the above claims, **characterized in that** the distance (D) between the light-radiating surface (28) of a respective LED (6) and the plate-shaped body (10) or the lens device (24) is filled with gas, particularly with air.

5. Room-illuminating device according to one or several of the above claims, **characterized in that** a respective LED (6) radiates with a radiation angle of 100 -130°, particularly 110 - 125°, particularly 115 - 122°.

6. Room-illuminating device according to one or several of the above claims, **characterized in that** the plate-shaped body (10) comprises indentations (30) on its side facing the light sources (4), wherein the LEDs (6) radiate light into the indentations (30) in the direction to the plate-shaped body (10) and the lens device (24).

7. Room-illuminating device according to claim 6, **characterized in that** the indentations (30) have essentially the form of a cylinder, of a cuboid or of a prism.

8. Room-illuminating device according to claim 6 or 7, **characterized in that** the indentations (30) are directly limited by the optically effective lens device (24).

9. Room-illuminating device according to claim 6, 7 or 8, **characterized in that** the LEDs (6) protrude or immerse at least with their light-radiating surfaces (28) into these indentations (30).

10. Room-illuminating device according to one or several of the above claims, **characterized in that** the openings (18) and their associated optically effective lens-device (24) are inclined against the plane of the plate-shaped body (10), particularly are inclined by 10-30°.

11. Room-illuminating device according to claim 10, **characterized in that** the LEDs (6) and their light-radiating surfaces (28) are arranged in parallel to a plane of the plate-shaped body (10), or each of the LEDs (6) and their light-radiating surfaces (28) are at least each arranged in planes that are parallel to each other.

12. Room-illuminating device according to one or several of the above claims, **characterized in that** the openings (18) have an opening angle of 30-130°, particularly of 30-110°, particularly of 30-100° and particularly of 30-90°.

13. Room-illuminating device according to one or several of the above claims, **characterized in that** the LEDs (6) are arranged on a carrier (8) which comprises the electric components of the room-illuminating device, wherein the carrier (8) is mountable, together with the LEDs (6), against the plate-shaped body (10) and can be disassembled, together with the LEDs (6), from the plate-shaped body (10), and is thus removable therefrom.

## Revendications

1. Lampe d'intérieur (2), comprenant une pluralité de sources d'éclairage (4) qui sont formées par des LED (6), et comprenant un corps en forme de plaque (10) disposé sur le côté rayonnant des sources d'éclairage (4), sensiblement transparent à la lumière ou diffusant la lumière, le corps en forme de plaque (10) possédant une pluralité d'ouvertures (18) ouvertes en surface dans la direction du rayonnement des sources d'éclairage (4) correspondant à l'arrangement de sources d'éclairage (4), à travers lesquelles la source d'éclairage (4) respective rayonne de la lumière, et le corps en forme de plaque (10), vue dans une direction, doublant tous les composants de la lampe d'intérieur et formant, jusqu'à un élément formant approximativement un cadre, l'ensemble du côté visible (12) de la lampe d'intérieur, les ouvertures (18) étant configurées pour s'élargir dans la direction du rayonnement des sources d'éclairage (4), notamment pour s'élargir en continu, et la lumière qui n'est pas rayonnée en tant que rayonnement primaire par les sources d'éclairage (4) à travers les ouvertures (18) qui s'élargissent étant envoyée dans le corps en forme de plaque (10) et étant rayonnée par celui-ci en tant que rayonnement secondaire dispersé, **caractérisée en ce que** les ouvertures (18) sont réalisées sous la forme d'ouvertures à fond plein dans le corps en forme de plaque (10) et sont délimitées par un fond (22) et **en ce que** le fond (22) respectif forme un moyen formant lentille (24) optiquement actif qui est à chaque fois réalisé d'un seul tenant avec le corps en forme de plaque (10), et **en ce qu'**un écart (D) est formé entre une surface d'émission de lumière (28) d'une LED (6) correspondante et le corps en forme de plaque (10) ou le moyen formant lentille (24).

2. Lampe d'intérieur selon la revendication 1, **caractérisée en ce que** les ouvertures (18), en coupe transversale dans le plan du corps en forme de plaque (10), sont réalisées arrondies, notamment circulaires ou ovales.

3. Lampe d'intérieur selon la revendication 1 ou 2, **caractérisée en ce que** les ouvertures (18) sont réalisées coniques.

4. Lampe d'intérieur selon une ou plusieurs des revendications précédentes, **caractérisée en ce que** l'écart (D) entre la surface d'émission de lumière (28) d'une LED (6) correspondante et le corps en forme de plaque (10) ou le moyen formant lentille (24) est rempli de gaz, notamment rempli d'air.

5. Lampe d'intérieur selon une ou plusieurs des revendications précédentes, **caractérisée en ce qu'**une LED (6) correspondante rayonne avec un angle de rayonnement de 100° à 130°, notamment de 110° à 125°, plus particulièrement de 115° à 122°.

6. Lampe d'intérieur selon une ou plusieurs des revendications précédentes, **caractérisée en ce que** le corps en forme de plaque (10) possède sur son côté qui fait face aux sources d'éclairage (4) des cavités (30) dans lesquelles les LED (6) injectent de la lumière en direction du corps en forme de plaque (10) et du moyen formant lentille (24).

7. Lampe d'intérieur selon la revendication 6, **caractérisée en ce que** les cavités (30) possèdent une forme sensiblement cylindrique, parallélépipédique ou prismatique.

8. Lampe d'intérieur selon la revendication 6 ou 7, **caractérisée en ce que** les cavités (30) sont délimitées directement par le moyen formant lentille (24) optiquement actif.

9. Lampe d'intérieur selon la revendication 6, 7 ou 8, **caractérisée en ce que** les LED (6) font saillie ou plongent dans ces cavités (30) au moins avec leurs surfaces d'émission de lumière (28).

10. Lampe d'intérieur selon une ou plusieurs des revendications précédentes, **caractérisée en ce que** les ouvertures (18) et les moyens formant lentille (24) optiquement actifs qui leur sont associés sont inclinés par rapport au plan du corps en forme de plaque (10), notamment de 10° à 30°.

11. Lampe d'intérieur selon la revendication 10, **caractérisée en ce que** les LED (6) et leurs surfaces d'émission de lumière (28) sont disposés parallèlement au plan du corps en forme de plaque (10) ou au moins tous sont disposés dans des plans mutuellement parallèles.

12. Lampe d'intérieur selon une ou plusieurs des revendications précédentes, **caractérisée en ce que** les ouvertures (18) possèdent un angle d'ouverture de 30° à 130°, notamment de 30° à 110°, particulièrement de 30° à 100° et plus particulièrement de 30° à 90°.

13. Lampe d'intérieur selon une ou plusieurs des revendications précédentes, **caractérisée en ce que** les LED (6) sont disposées sur un support (8) comprenant les composants électriques de la lumière d'intérieur et ce support (8), conjointement avec les LED (6), peut être monté contre le corps en forme de plaque (10) et peut également être démonté, c'est-à-dire détaché, du corps en forme de plaque (10) conjointement avec les LED (6).
